# EUROPÄISCHE PATENTSCHRIFT

(11) **EP 2 567 106 B1**
(45) Veröffentlichungstag und Bekanntmachung des Hinweises auf die Patenterteilung: **04.11.2015**
(21) Anmeldenummer: 11734044.8
(22) Anmeldetag: 30.06.2011
(51) Int. Cl.: F16B 13/00, F16B 13/08

(54) **VERFAHREN ZUM HERSTELLEN EINER FESTEN VERBINDUNG, WERKZEUG SOWIE VERBINDUNG**
METHOD FOR PRODUCING A FIXED CONNECTION, TOOL AND CONNECTION
PROCÉDÉ DE PRODUCTION D'UNE LIAISON SOLIDE, OUTIL ET LIAISON

(30) Priorität: 02.07.2010 DE 102010025975
(43) Veröffentlichungstag der Anmeldung: 13.03.2013
(73) Patentinhaber: Flaig, Hartmut, 78554 Aldingen (DE)
(72) Erfinder: HOLSCHER, Winfried K.W., 78234 Engen (DE)
(74) Vertreter: Wagner, Kilian
(86) Internationale Anmeldenummer: PCT/EP2011/061020
(87) Internationale Veröffentlichungsnummer: WO 2012/001110

(56) Entgegenhaltungen:
- EP-A1- 0 848 169
- EP-A1- 0 889 250
- DE-A1-102008 035 276
- US-A- 4 702 654

## Beschreibung

Die Erfindung betrifft ein Verfahren zum Herstellen einer festen Verbindung zwischen einem Metalldübel und einem Substrat gemäß Anspruch 1, ein Werkzeug zum Herstellen einer derartigen Verbindung gemäß Anspruch 8 sowie eine mittels des Verfahrens und/oder des Werkzeugs hergestellte Verbindung gemäß Anspruch 9 und darüber hinaus die Verwendung eines Metalldübels zur Durchführung des Verfahrens und/oder zum Herstellen der Verbindung gemäß Anspruch 12.

Aus der EP 0 848 169 A1 ist zum Verfahren zum Herstellen einer festen Verbindung zwischen einem Metalldübel und einem Substrat bekannt, wobei sogenannte Spreizlappen plastisch verdrillt werden. Der hierzu eingesetzte Dübel ist innengewindefrei.

Die DE 10 2008 035 276 A1 zeigt einen Dübel mit Innengewinde.

Aus der EP 0889250 A1 ist ein Hinterschnittdübel bekannt.

Die EP 0217053 A1 beschreibt einen Spreizanker der am in Einsteckrichtung vorderen Ende eine sich in Einsteckrichtung erweiternden Spreizkonus aufweist, auf den eine Spreizhülse aufschiebbar ist.

Aus der WO 2009/149789 A1 ist ein dort als Spreizhülse beschriebener, frontseitig offener Metalldübel zum Einbringen in ein Sandwichmaterial bekannt, dessen Kern von einer Metallschaumschicht gebildet ist. Der bekannte Metalldübel weist endseitige Zinnen auf, welche in Einbaulage radial nach außen über den Hülsenmantel abgekragt sind, damit sich diese auf der Innenseite eines in Bezug auf die Einsetzrichtung hinteren Metallbleches des Sandwichmaterials abstützen können, um ein Herausziehen der Spreizeinrichtung in axialer Richtung aus der Sandwichmaterialbohrung zu verhindern. Der bekannte Metalldübel umfasst ein Innengewinde, in welches in Einbaulage der Spreizeinrichtung eine Schraube eindrehbar ist. Zum Festlegen des bekannten Metalldübels in dem Metallschaumsubstrat wird der Metalldübel auf Zug beansprucht und gleichzeitig in radialer Richtung aufweitet, derart, dass die Zinnen gleichmäßig, d.h. insgesamt eine konische Hüllkontur erhaltend, in radialer Richtung nach außen kraftbeaufschlagt werden. Mit dem bekannten Verfahren ist es nicht möglich, den bekannten Metalldübel in ein Vollmaterialsubstrat, wie Holz, Kunststoff oder Stein einzubringen.

Aus der US 4,702,654 ist ein innengewindefreier Spreizanker bekannt, der an seinem entgegen einer Einsetzrichtung orientierten Ende mehrere in Umfangsrichtung beabstandete Zinnen aufweist, die mit einem Konuselement gleichmäßig aufgespreizt werden. Damit der bekannte Spreizanker in Vollmaterial eingebracht werden kann, schlägt die Druckschrift vor, am hinteren Ende der Zinnen

Schneideinsätze vorzusehen, mit denen Material abgetragen werden kann. Der bekannte Spreizanker kann zwar mit herkömmlichen konusförmigen Spreizdornen in Vollmaterial eingebracht werden, insgesamt ist die Vorgehensweise jedoch sehr kostenaufwendig, da die Zinnen zuvor mit den Schneidelementen ausgestattet werden müssen.

Aus der DE 42 31 313 A1 ist ein Spreizdübel bekannt, der in einem Dübelloch verankert und bei Bedarf wieder entfernt werden kann. Hierzu sind ein Dübelkern und eine Dübelhülse mit aufeinander abgestimmten Keilprofilen versehen, die in Umfangsrichtung mit geringer Steigung in nur einer Richtung ansteigen und durch Verdrehen des Dübelkerns relativ zu der feststehenden Dübelhülse in selbsthemmenden Reibschluß bringbar und auch wieder lösbar sind. Bei Eindrehen des Dübelkerns werden Zinnen der Dübelhülse elastisch in Umfangsrichtung verstellt. Ein plastisches Verformen der Zinnen muss unbedingt vermieden werden, um den Dübel wie gefordert, wieder entnehmen zu können. Eine ausreichende Aufweitung der beim Verdrehen des Dübelkerns nicht mitdrehenden Dübelhülse ist bei dem bekannten Spreizdübel nicht gewährleistet.

Aus der DE 10 2008 048 387 A1 ist ein weiterer Dübel bekannt, der an seiner Vorderseite Materialabtragsmittel aufweist. Endseitige Zinnen werden gleichförmig in radialer Richtung kraftbeaufschlagt, um diese gleichförmig in Umfangsrichtung zu weiten.

Ausgehend von dem vorgenannten Stand der Technik liegt der Erfindung die Aufgabe zugrunde, ein Verfahren anzugeben, das zum Herstellen einer festen Verbindung zwischen einem Metalldübel und einem, vorzugsweise als Vollmaterialsubstrat, d.h. nicht als Schaum ausgebildetes oder Poren aufweisendes Substrat, ausgebildetes Substrat geeignet ist. Ferner besteht die Aufgabe darin, ein Werkzeug zur Durchführung des Verfahrens anzugeben, sowie eine Verbindung zwischen einem Metalldübel und einem, vorzugsweise als Vollmaterialsubstrat ausgebildeten, Substrat.

Diese Aufgabe wird hinsichtlich des Verfahrens mit den Merkmalen des Anspruchs 1, hinsichtlich des Werkzeugs mit den Merkmalen des Anspruchs 9 und hinsichtlich der Verbindung mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, dass die mindestens eine Zinne des Metalldübels nach Einbringen des Metalldübels in eine Substratbohrung nicht wie im Stand der Technik über den Umfang gleichmäßig in radialer Richtung plastisch verformt wird, sondern derart, dass die Zinne verschränkt wird, so dass dabei ein in eine Drehrichtung vorderer Umfangabschnitt, d.h. ein in Drehrichtung gelegenes vorderes Ende der Zinne weiter nach radial außen verstellt wird, als ein hinteres Ende der Zinne, so dass der vordere Umfangsabschnitt der Zinne als Schneide oder Schaber, d.h. spanabtragend wirkt, um beim Verdrehen des Metalldübels um seine Längsachse in eine Drehrichtung Substratmaterial, beispielsweise Holz, Kunststoff oder Stein, abzutragen um damit in radialer Richtung in dem vorzugsweise als Vollmaterialsubstrat ausgebildeten Substrat Raum für eine weitere Aufweitung der mindestens einen Zinne in radialer Richtung zu schaffen. Anders ausgedrückt wird durch Axialkraftbeaufschlagen des Metalldübels, genauer der mindestens einen hinteren Zinne, eine Radialkraftkomponente erzeugt, die derart auf die mindestens eine Zinne wirkt, dass die mindestens eine Zinne in Bezug auf ihre Umfangserstreckung, bevorzugt durch plastische (dauerhafte) Verformung, ungleichmäßig weit in radialer Richtung verstellt wird, so dass ein in eine Drehrichtung gelegener vorderer Umfangsabschnitt, insbesondere ein vorderes Ende, weiter nach radial außen verstellt wird als ein hinteres Ende, um somit spanabtragend bzw. substratmaterialabtragend zu wirken, mit dem Ziel, eine weite Aufweitung der Zinne in radialer Richtung zu ermöglichen bzw. Platz in radialer Richtung hierfür zu schaffen, so dass die mindestens eine Zinne bei der fertigen festen Verbindung ein Herausziehen des Metalldübels in axialer Richtung entgegen der Einsetzrichtung aufgrund des zwischen der Zinne und dem Substrat hergestellten (in axialer Richtung wirksamen) formschlüssigen Verbindung, d.h. durch Abstützen in axialer Richtung sicher verhindert. Das Abtragen des Substrates mittels des vorderen Umfangsabschnittes, vorzugsweise mittels des vorderen Endes bzw. vorzugsweise einer in Umfangsrichtung bzw. in Drehrichtung weisenden Stirnseite der Zinne, erfolgt durch Beaufschlagen des Metalldübels in die vorgenannte, in Umfangsrichtung orientierte Drehrichtung. Bei diesem Verdrehen wird aufgrund der Verschränkung der mindestens einen Zinne Material abgetragen.

Besonders zweckmäßig ist es, wenn der Metalldübel außen, zumindest im Bereich der Zinnen/oder in einem axial an die Zinnen angrenzenden Axialabschnitt zylindrisch konturiert ist und erst durch die Axialkraftbeaufschlagung ein Verstellen der mindestens einen Zinne in radialer Richtung über den Umfangsrand eines an die Zinnen angrenzenden Axialabschnittes, insbesondere des Hülsenmantelabschnittes, bewirkt wird.

Besonders zweckmäßig ist es, wenn nicht nur eine einzige, endseitige sich in Umfangrichtung erstreckende zu verschränkende Zinne vorgesehen ist, sondern wenn mehrere derartige, vorzugsweise gleichmäßig in Umfangsrichtung verteilt angeordnete, Zinnen vorgesehen sind, wobei es noch weiter bevorzugt ist, wenn mindestens zwei der Zinnen, vorzugsweise sämtliche Zinnen, wie zuvor anhand des Beispiels einer Zinne beschrieben, jeweils unterschiedlich stark in radialer Richtung verformt werden um mehrere substratmaterialabtragende, in radialer Richtung über die den jeweiligen Endabschnitt vorstehende Umfangsabschnitte bzw. Kanten und/oder in Umfangsrichtung weisende Stirnseiten zu erhalten.

Bevorzugt erfolgt das Erzeugen der Radialkraftkomponente zum ungleichmäßigen Verstellen der mindestens einen Zinne in Umfangsrichtung mittels eines entsprechend ausgeformten Werkzeugs, bei welchem eine mit der in radialer Richtung zu verstellenden Zinne zusammenwirkende Abstützfläche des Werkzeuges einen Verlauf in radialer Richtung aufweist, d.h. eine von einer konischen Konturierung abweichende Konturierung, derart, dass ein in Drehrichtung vorderer Abschnitt der Abstützfläche weiter in radialer Richtung nach außen ragt als ein dahinter gelegener Abschnitt der Abstützfläche. Der Einsatz eines derartigen Werkzeuges bietet sich an, da in diesem Fall der Innenumfang der Zinnen vor dem Verstellen zylindrisch konturiert werden kann. Zusätzlich oder alternativ ist es denkbar, die Zinnen an ihrem Innenumfang nicht zylindrisch zu konturieren, sondern mit einem radialen Verlauf zu versehen, derart, dass die Zinnen in einem in Drehrichtung vorderen Bereich weiter nach radial innen ragen als in einem in Drehrichtung hinteren Bereich, so dass durch entsprechende Radialkraftbeaufschlagung ein ungleichmäßiges Aufweiten in radialer Richtung erfolgt. Im letztgenannten Fall könnte als Werkzeug auch ein Werkzeug mit einer konisch konturierten Abstützfläche vorgesehen werden. Bevorzugt ist jedoch die Ausführungsvariante, bei der die Zinnen vor dem Radialverstellen mit ihrer Innenseite auf einer gedachten Zylindermantelfläche liegen. Ein derartiger Metalldübel lässt sich wesentlich einfacher herstellen.

Bevorzugt entspricht der Durchmesser der Substratbohrung, in die der Metalldübel in Einsetzrichtung eingesetzt wird, zumindest in einem vorderen Bereich dem Durchmesser des Metalldübels, insbesondere dem Durchmesser eines in Einsetzrichtung vor den Zinnen angeordneten Zylindermantelabschnittes (Hülsenmantelabschnitt).

Erfindungsgemäß erfolgt das Axialkraftbeaufschlagen nicht gleichmäßig, sondern pul-sierend, insbesondere durch den Einsatz eines Schlagschraubers oder Schlag-bohrers mit einem entsprechenden (Werkzeug-)Aufsatz. Besonders zweckmä-ßig ist es, wenn das Axialkraftbeaufschlagen zum Erzeugen der Radialkraft-komponenten zum Verschränken der mindestens einen Zinne gleichzeitig mit dem Kraftbeaufschlagen des Metalldübels in Umfangsrichtung erfolgt. Dies kann beispielsweise durch den Einsatz eines Schlagwerkzeuges, wie eines Schlagbohrers oder Schlagschraubers erzielt werden. Es ist auch denkbar die Axialkraftbeaufschlagung und die Kraftbeaufschlagung in Drehrichtung immer abwechselnd nacheinander zu realisieren.

Es ist denkbar, jedoch nicht zwingend notwendig, dass der Metalldübel, nachdem ausreichend Substratmaterial mit dem in Umfangsrichtung betrachtet vorderen Umfangsabschnitt der mindestens einen Zinnen abgetragen wurde, nochmals in axialer Richtung kraftbeaufschlagt wird, derart, dass eine Radialkraftkomponente resultiert, die den hinteren Umfangsabschnitt der mindestens einen Zinne, zumindest näherungsweise, in radialer Richtung soweit nach radial außen beaufschlagt, dass nach diesem Vorgang die mindestens eine Zinne über ihre Umfangserstreckung mit ihrer Stirnkante zumindest näherungsweise auf einem gemeinsamen, d.h. demselben Radius liegt. Dies kann beispielsweise durch Axialkraftbeaufschlagen mittels einer konischen Abstützfläche erreicht werden.

Wie bereits angedeutet, ist es bevorzugt, wenn der Metalldübel vor dem Einsetzen in die Bohrung, zumindest im Bereich der Zinnen und/oder in einem axial daran angrenzenden, insbesondere umfangsgeschlossenen Axialabschnitt (Zylindermantelflächenabschnitt), eine äußere Zylindermantelhüllkontur aufweist. Bevorzugt ist eine innere Zylindermantelhüllkontur auch im Bereich der Zinnen vor deren Verschränken vorgesehen.

Um zu verhindern, dass der Metalldübel, je nach Beschaffenheit des vorzugsweise als Vollmaterialsubstrat ausgebildeten Substrates, durch die, vorzugsweise schlagende, Axialkraftbeaufschlagung in das Substrat hineingetrieben wird, d.h. sich axial über die Bohrung hinaus weiter vorarbeitet, ist in Weiterbildung der Erfindung mit Vorteil vorgesehen, dass der Metalldübel eine große axiale Abstütz- bzw. Auflagefläche aufweist, die vorzugsweise von einer geschlossenen in Einsetzrichtung weisenden Stirnseite gebildet ist. Bevorzugt ist die Stirnseite durch nachträgliches Verschließen einer Durchgangsöffnung gebildet, beispielsweise durch Anschweißen einer Abschlussscheibe oder durch Eindrehen eines Gewindestückes in das in diesem Fall axial durchgehende Innengewinde.

Bevorzugt erfolgt das Kraftbeaufschlagen des Metalldübels in die Drehrichtung mittels mindestens eines Radialfortsatzes eines zur Anwendung kommenden Werkzeuges, welcher den hinteren Umfangsabschnitt zumindest einer Zinne oder einen nicht in radialer Richtung verformten, insbesondere zinnenartigen, Axialfortsatz des Metalldübels in die Drehrichtung kraftbeaufschlagt.

Besonders zweckmäßig ist es, wenn die Bohrung nicht als durchgehende (durchmesserkonstante) Zylinderbohrung, sondern als, vorzugsweise einfach, gestufte, Stufenbohrung ausgebildet ist, wobei ein vorderer zylindrischer Bohrungsabschnitt einen geringeren Durchmesser aufweist als ein hinterer Bohrungsabschnitt, wobei der Durchmesser des vorderen Bohrungsabschnittes bevorzugt dem Durchmesser des Metalldübels zzgl. eines Spiels entspricht. Bevorzugt ist die Axialerstreckung des vorderen Bohrungsabschnittes so bemessen, dass dieser axial nach hinten von den Zinnen überragt wird, um diese so durch das Vorsehen des hinteren, einen (etwas, z.B. 1mm bis 4mm) größeren Durchmesser aufweisenden, Bohrungsabschnittes erleichtert aufweiten zu können derart, dass diese die Zinnen in die von dem Substrat gebildete Umfangswand des hinteren Bohrungsabschnittes materialabtragend hineinverstellt werden können.

Die Erfindung betrifft auch ein Werkzeug, insbesondere zum Aufsetzen auf ein Schlagwerkzeug oder aufgesetzt auf ein Schlagwerkzeug, wie ein Schlagbohrer oder ein Schlagschrauber, zur Durchführung des nach dem Konzept der Erfindung ausgebildeten Verfahrens, wobei das Werkzeug, vorzugsweise neben einem Radialfortsatz zur Beaufschlagung der Metallhülse, in die Drehrichtung eine zum Zusammenwirken mit der mindestens einen Zinnen ausgebildete Abstützfläche aufweist, die am Innenumfang der Zinne anliegen kann, wobei diese Abstützfläche derart konturiert ist, dass bei Axialkraftbeaufschlagung eine ungleichmäßig starke Verformung der Zinne in radialer Richtung erfolgt, so dass ein in Umfangsrichtung bzw. in Drehrichtung betrachtet vorderer Umfangsabschnitt der Zinne weiter nach radial außen verstellt wird als ein hinterer Abschnitt. Bevorzugt ist die Abstützfläche dabei derart konturiert, dass sie in einem in Umfangsrichtung bzw. in Drehrichtung betrachtet vorderen Abschnitt weiter nach radial außen reicht als in einem in die Drehrichtung betrachtet hinteren Abschnitt der Abstützfläche. Bevorzugt folgt die Abstützfläche dabei einer Spiralform. Bevorzugt ist eine vordere Abschlusskante der mindestens einen Abstützfläche teilkreisförmig konturiert und konzentrisch zur Längsmittelachse des Werkzeugs angeordnet. In diesem Fall verändert sich der von der Abstützfläche und der Längsmittelachse aufgespannte Neigungswinkel über die Umfangserstreckung der Abstützfläche. Es ist auch denkbar den Neigungswinkel der Abstützfläche über die Umfangserstreckung konstant zu halten - in diesem Fall verläuft die vordere Abschlusskante der Abstützfläche nicht konzentrisch zu der Längsmittelachse des Werkzeugs.

Die Erfindung betrifft auch eine mittels des zuvor beschriebenen nach dem Konzept der Erfindung ausgebildeten Verfahrens hergestellte Verbindung zwischen dem vorzugsweise als Vollmaterialsubstrat, d.h. zumindest näherungsweise porenfrei, d.h. nicht als Schaum ausgebildeten Substrat und dem Metalldübel. Bevorzugt handelt es sich bei dem Substrat um Holz, Kunststoff oder Stein, wobei unter Stein auch Beton oder dergleichen verstanden wird.

Bevorzugt zeichnet sich die Verbindung dadurch aus, dass der in die Drehrichtung betrachtet vordere Bereich der mindestens einen Zinne weiter in radialer Richtung vorsteht als ein hinterer Bereich, vorzugsweise um mindestens 0,2mm, noch weiter bevorzugt um mindestens 0,5mm, besonders bevorzugt um mindestens 1mm, noch weiter bevorzugt um mindestens 1,5mm, ganz besonders bevorzugt um mindestens 2mm, oder mindestens 3mm oder mindestens 4mm oder mindestens 5mm.

In Weiterbildung der Erfindung zeichnet sich die Verbindung im Gegensatz zu einer durch Zugbeaufschlagung des Metalldübels hergestellten Verbindung dadurch aus, dass zwischen dem zunächst bestehenden zylindermantelförmigen Innenumfang der Bohrung und der radialen End- bzw. Fixierposition der mindestens einen Zinne kein Material vorhanden ist, da der Metalldübel beim Einbringen in Einsetzrichtung kraftbeaufschlagt und in Umfangsrichtung verdreht wurde.

Die Erfindung führt auch auf die Verwendung eines Metalldübels zur Durchführung des Verfahrens und/oder zur Herstellung der zuvor beschriebenen Verbindung, wobei sich der Metalldübel durch mindestens eine nach hinten weisende Zinne auszeichnet und vorzugsweise durch einen axial an die mindestens eine Zinne angrenzenden, vorzugsweise umfangsgeschlossenen, insbesondere zylindermantelförmigen Axialabschnitt über dessen Umfang in radialer Richtung hinaus die mindestens eine Zinne bei der Durchführung des Verfahrens ungleichmäßig in radialer Richtung verformt wird. Bevorzugt weist der Metalldübel eine geschlossene, in Einsetzrichtung weisende Stirnseite auf.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine geschnittene Darstellung einer bevorzugten Ausführungsform eines Metalldübels vor dem Einsetzen in eine Substratbohrung,
- Fig. 2: den Metalldübel gemäß Fig. 1 nach der Anwendung des Verfahrens mit in radialer Richtung verschränkten Zinnen,
- Fig. 3: eine Draufsicht auf die hintere Stirnseite des aufgeweiteten Metalldübels gemäß Fig. 2,
- Fig. 4: eine Verbindung umfassend ein Vollmaterialsubstrat und einen darin eingebrachten Metalldübel mit in radialer Richtung verschränkten Zinnen,
- Fig. 5: eine mögliche Ausführungsform eines Werkzeugs zur Herstellung einer Verbindung gemäß Fig. 4,
- Fig. 6a: eine Schnittansicht entlang der Schnittlinien A-A gemäß Fig. 5, und
- Fig. 6b: eine Schnittansicht entlang der Schnittlinien B-B gemäß Fig. 5.

In den Figuren sind gleiche Elemente und Elemente mit der gleichen Funktion mit den gleichen Bezugszeichen gekennzeichnet.

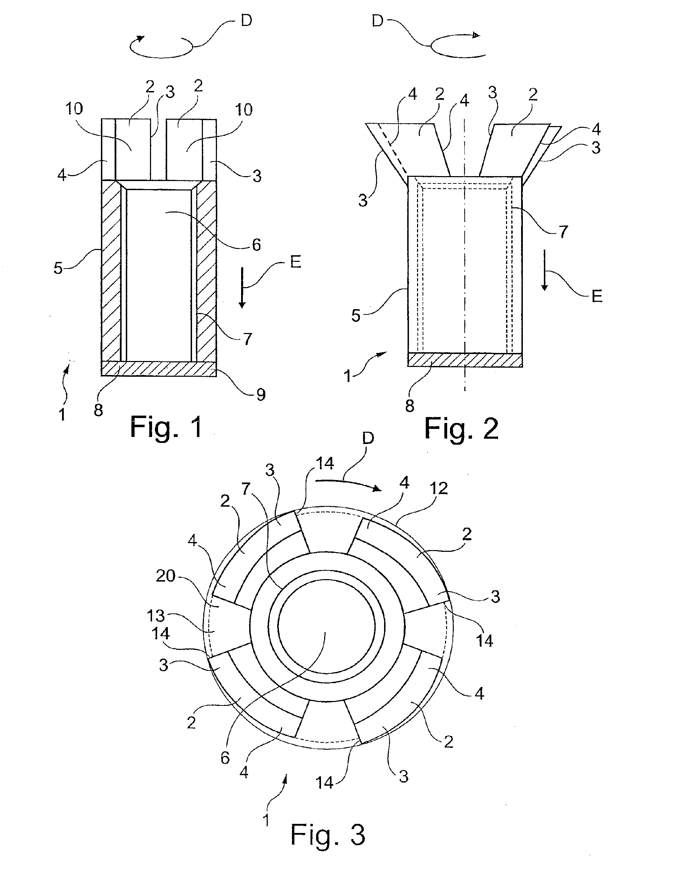

In Fig. 1 ist eine mögliche Ausführungsform eines Metalldübels 1 gezeigt. Dieser ist dazu bestimmt, in eine Einsetzrichtung E (Axialrichtung) in eine Bohrung in einem Substrat, insbesondere Holz, Stein oder Kunststoff, eingesetzt zu werden. In Bezug auf die Einsetzrichtung E hinten umfasst der Metalldübel 1 mehrere, hier vier, in Umfangsrichtung gleichmäßig voneinander beabstandete in Umfangsrichtung gekrümmte Zinnen 2 mit einem in eine Drehrichtung D weisenden vorderen Umfangsabschnitt 3 sowie einem entgegen der Drehrichtung D weisenden hinteren Umfangsabschnitt 4. Die Zinnen 2 weisen eine äußere, zylindrische Hüllkontur auf, die mit einer zylindrischen Hüllkontur eines an die Zinnen 2 axial angrenzenden Axialabschnittes 5 fluchtet. Bei dem Axialabschnitt 5 handelt es sich um einen Zylindermantelabschnitt. In diesem ist eine Innengewindeöffnung 6 mit Innengewinde 7 zum Festlegen einer Schraube eingebracht. Wie sich aus Fig. 1 ergibt, ist die Innengewindeöffnung 6 an der in Einsetzrichtung E gelegenen Stirnseite 8 verschlossen, hier mittels eines Plättchens 9. Alternativ ist auch eine Ausbildung des Metalldübels 1 aus einem einzigen Bauteil realisierbar. Ggf. kann, insbesondere bei hartem Substratmaterial wie Stein, auf ein Verschließen der Stirnseite 8 verzichtet werden. In diesem Fall hat dann der Metalldübel 1 eine Durchgangsöffnung.

Zu erkennen ist, dass die Innengewindeöffnung 6 eine zylindrische innere Hüllkontur aufweist, ebenso wie die Zinnen 2. Beide inneren Hüllkonturen sind über einen nicht mit einem Bezugszeichen versehenen Konusabschnitt voneinander beabstandet.

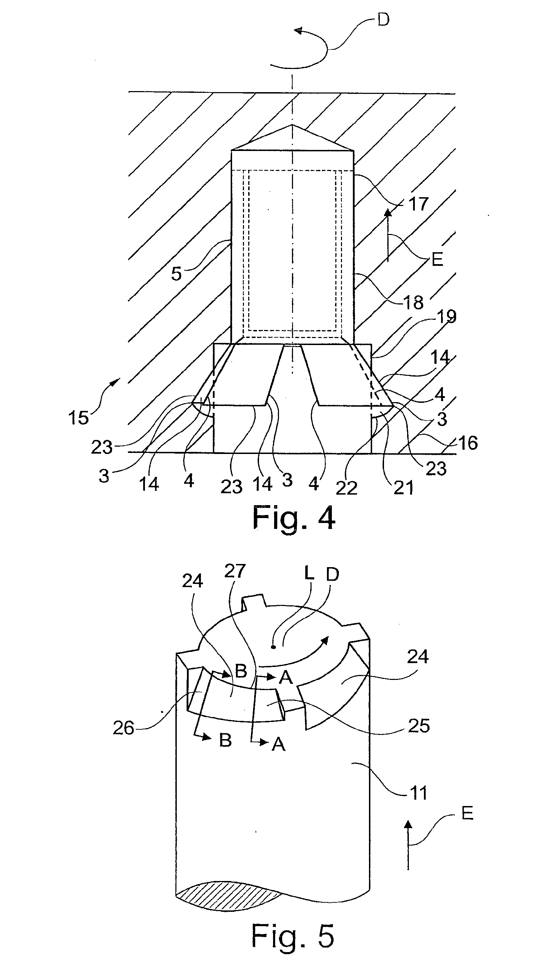

Zum Festlegen des Metalldübels 1 in einer Bohrung in einem Substrat werden die Zinnen 2, wie in Fig. 2 und 3 gezeigt, in radialer Richtung verschränkt. Hierzu werden die Zinnen 2 auf ihrer inneren Umfangsseite 10 bzw. anfänglich an ihrer inneren Stirnkante axialkraftbeaufschlagt mittels eines wie beispielsweise in Fig. 5 dargestellt ausgebildeten Werkzeuges 11. Diese Axialkraftbeaufschlagung erfolgt bevorzugt schlagend. Durch den Einsatz des Werkzeugs 11 mit seinen schräg zur Axialerstreckung des Metalldübels 1 verlaufenden Abstützflächen resultiert auf die Zinnen 2 eine Radialkraftkomponente derart, dass die Zinnen 2 jeweils ungleichmäßig stark in radialer Richtung verformt werden, wie dies besonders gut in Fig. 3 zu erkennen ist. Dort ist gezeigt, dass die in Drehrichtung D vorderen Umfangsabschnitte 3 der Zinnen 2 bzw. die in Umfangsrichtung, genauer in Drehrichtung D, weisenden Enden der Zinnen 2 weiter nach radial außen verstellt werden als die jeweils entgegen der Drehrichtung D orientierten (hinteren) Umfangsabschnitte 4 bzw. hinteren Enden. Anders ausgedrückt werden die Zinnen 2 so verformt, dass die vorderen Umfangabschnitte 3 auf einem größeren Radius 12 zum Liegen kommen als die hinteren Umfangsabschnitte 4 bzw. die hinteren Enden, die auf einem kleineren Radius 13 zum Liegen kommen. Hierdurch bilden die vorderen Umfangsabschnitte 3 beim Verdrehen des Metalldübels 1 in die Drehrichtung D nach radial außen abstehende spanabtragende Bereiche 14 bzw. Schneiden bzw. Schaber, die in radialer Richtung vorstehen vor dem hinteren Umfangsabschnitt der jeweils in Drehrichtung davor liegenden Zinne 2. Zu erkennen ist, dass beide Radien 12, 13 größer sind als der Außenradius des an die Zinnen axial angrenzenden zylindrischen Axialabschnittes 5.

Aus Fig. 3 ist zu erkennen, dass jeweils zwei in Umfangsrichtung benachbarte Zinnen 2 über einen Abstand 20 (materialfreier Umfangsabschnitt) voneinander beabstandet sind. In diesen Abschnitt kann jeweils ein später noch zu erläuternder Radialfortsatz des Werkzeugs 11 eingreifen um die hinteren Umfangsabschnitte der Zinnen 2, genauer deren entgegen der Drehrichtung D weisende Enden, mit einer (Dreh-)Kraft zu beaufschlagen.

In Fig. 4 ist eine Verbindung 15 umfassend ein als Vollmaterialsubstrat, insbesondere Holz, Stein wie Beton oder Kunststoff, ausgebildetes Substrat 16 gezeigt. In dieses Substrat ist eine als Stufenbohrung ausgebildete Bohrung 17 eingebracht, deren vorderer zylindrischer Abschnitt 18 einen Durchmesser aufweist, der dem Durchmesser des Axialabschnittes 5 zzgl. eines minimalen Spiels entspricht. Axial entgegen der Einsetzrichtung E schließt daran an ein hinterer Abschnitt 19 mit einem Durchmesser, der etwas größer ist als der Durchmesser des vorderen zylindrischen Abschnittes 18, vorzugsweise um etwa 1 mm bis 3mm größer ist.

Wie aus Fig. 4 ersichtlich ist, überragen die Zinnen 2 den vorderen zylindrischen Abschnitt 13 entgegen der Einsetzrichtung E und sind nach radial außen aufgeweitet über den Außenumfang des zylindrischen Axialabschnittes 5 hinaus, wobei weiter zu erkennen ist, dass die Zinnen 2 nicht gleichmäßig in radialer Richtung aufgeweitet sind, sondern dass die in Umfangsrichtung betrachtet vorderen Enden der Zinnen bzw. die vorderen Umfangsabschnitte 3 radial weiter nach außen ragen als die jeweiligen hinteren Umfangsabschnitte 4, wodurch spanabtragende radial vorstehende Bereiche 14 zum Abtragen von Substratmaterial gebildet sind. Bevorzugt werden die Zinnen 2 gleichzeitig in radialer Richtung aufgebogen und in Umfangsrichtung, d.h. genauer in Drehrichtung D kraftbeaufschlagt. Hierdurch wurde in einen an den hinteren zylindrischen Abschnitt 19 radial angrenzenden Bereich 21 Substratmaterial abgetragen. Zu erkennen ist, dass dieser Bereich 21 an seiner entgegen der Einsetzrichtung E orientierten Seite eine gekrümmte Grundfläche 22 aufweist und dass in einem Bereich radial zwischen der Bohrung 17 und der hintern Umfangskante 23 der Zinnen kein Substratmaterial vorhanden ist.

Dadurch, dass die Zinnen 2 den Innenumfang der (ursprünglichen) Bohrungskontur der Bohrung 17 in radialer Richtung überragen, stützen sich die Zinnen 2 im Substrat 16 in axialer Richtung nach hinten ab, wodurch ein Herausziehen des Metalldübels 1 entgegen der Einsetzrichtung E sicher vermieden wird.

Fig. 5 zeigt eine mögliche Ausführungsform eines Werkzeugs 11 zum Einbringen des Metalldübels 1 bzw. zum Aufweiten von dessen Zinnen. Das Werkzeug 11 weist eine der Anzahl der Zinnen 2 des Metalldübels 1 entsprechende Anzahl von Abstützflächen 24 auf, die derart geometrisch ausgeformt sind, dass das gewünschte, zuvor bereits erläuterte, Aufschränken der Zinnen in radialer Richtung resultiert. Hierzu ragen die in Drehrichtung D vorderen Umfangsbereiche 25 bzw. vordere Enden in radialer Richtung weiter nach radial außen als die in Drehrichtung D hinteren Umfangsbereiche 26 bzw. hinteren Enden. In dem gezeigten Ausführungsbeispiel ist der Verlauf der Abstützfläche 24 in einem Bereich zwischen dem vorderen und dem hinteren Umfangsbereich 25, 26 stetig.

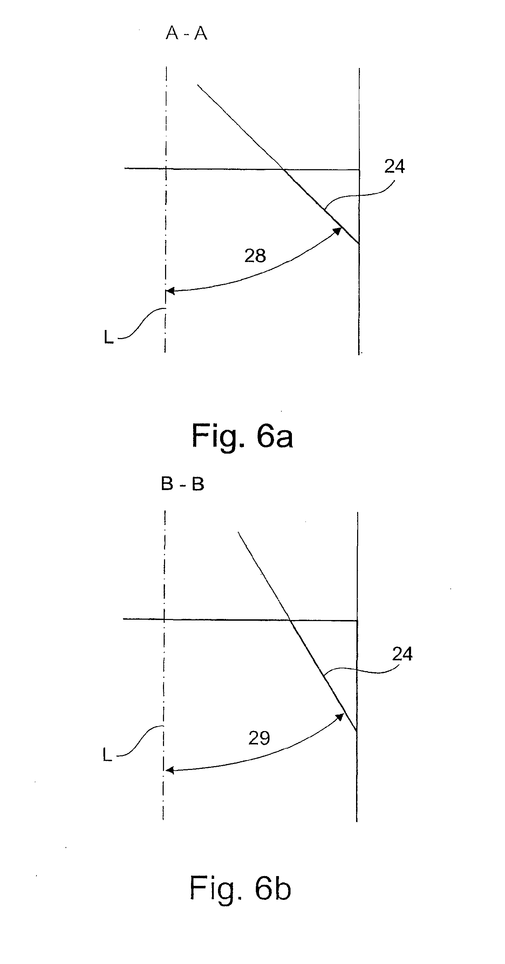

Bei dem in Fig. 5 gezeigten Ausführungsbeispiel ist in Zusammenschau mit den Fig. 6a und 6b zu erkennen, dass eine in Einsetzrichtung E vordere, sich in Umfangsrichtung erstreckende Kante 27 der Abstützfläche 24 durchgehend auf einem bestimmten Radius befindet. Um dies zu gewährleisten, ist der Neigungswinkel der Abstützflächen 24 zur Längsmittelachse des Werkzeugs über den Verlauf der Abstützfläche 24 in Umfangsrichtung unterschiedlich. Anders ausgedrückt schließt die Abstützfläche 24 im vorderen Umfangsbereich 25 mit der Längsmittelachse L des Werkzeuges 11 einen größeren Winkel 28 ein als im hinteren Umfangsbereich 26. Der Neigungswinkel 29 der Abstützfläche 24 zur Längsachse L im hinteren Umfangsbereich ist in dem gezeigten Ausführungsbeispiel um etwa 15° kleiner als der Winkel 28 und beträgt etwa 30°. Der (vordere) Winkel 28 beträgt etwa 45°.

Alternativ ist es möglich, eine Abstützfläche 24 mit über ihre Umfangserstreckung zumindest näherungsweise gleichbleibende Abstützflächen-Neigungswinkel zur Längsmittelachse zu realisieren. In diesem Fall ist die Kante 27 über ihre Umfangserstreckung jedoch nicht auf einem gleichbleibenden Radius angeordnet, sondern verläuft von in Drehrichtung D vorne nach in Drehrichtung D hinten betrachtet radial nach innen.

Um den Metalldübel 1 in der Drehrichtung D mitnehmen zu können, damit die plastisch verformten Zinnen 2 mit ihrem radial vorstehenden vorderen Umfangsabschnitt 3 Material abtragen können, ist zumindest einer der Zinnen, vorzugsweise ist jeder der Zinnen, (jeweils) eine sich in radialer Richtung erstreckende, d.h. in Umfangsrichtung wirksame Anlage- bzw. Mitnahmefläche des Werkzeugs zur Anlage am in Drehrichtung D betrachtet hinteren Umfangsabschnitt zugeordnet.

### Bezugszeichen

- 1: Metalldübel
- 2: Zinne
- 3: vorderer Umfangabschnitt
- 4: hinterer Umfangsabschnitt
- 5: Axialabschnitt
- 6: Innengewindeöffnung
- 7: Innengewinde
- 8: Stirnseite
- 9: Plättchen
- 10: innere Umfangsseite
- 11: Werkzeug
- 12: großer Radius
- 13: kleiner Radius
- 14: Bereich
- 15: Verbindung
- 16: Substrat
- 17: Bohrung
- 18: vorderer zylindrischer Abschnitt
- 19: hinterer zylindrischer Abschnitt
- 20: Abstand
- 21: Bereich
- 22: gekrümmte Grundfläche
- 23: Umfangskante
- 24: Abstützfläche
- 25: vorderer Umfangsbereich
- 26: hinterer Umfangsbereich
- 27: Kante
- 28: Neigungswinkel (in Drehrichtung vorne)
- 29: Neigungswinkel (in Drehrichtung weiter hinten)

- D: Drehrichtung
- E: Einsetzrichtung
- L: Längsmittelachse des Werkzeugs

## Patentansprüche

1. Verfahren zum Herstellen einer festen Verbindung (15) zwischen einem Metalldübel (1) und einem, vorzugsweise als Vollmaterialsubstrat ausgebildeten, Substrat (16) mit den Schritten:
• Bereitstellen eines Metalldübels (1), umfassend mindestens eine sich entgegen einer Einsetzrichtung (E) erstreckende endseitige, sich in eine in Umfangsrichtung orientierte Drehrichtung (D) erstreckende Zinne (2)
• Einbringen einer Bohrung (17) in das Substrat (16),
• Einsetzen des Metalldübels (1) in die Bohrung (17) in der Einsetzrichtung (E),
• Kraftbeaufschlagen des Metalldübels (1) in Einsetzrichtung (E) und dabei Erzeugen einer Radialkraftkomponente derart, dass ein in die Drehrichtung (D) weisender vorderer Umfangsabschnitt (3) nach radial außen verstellt wird, derart, dass der vordere Umfangsabschnitt (3) in radialer Richtung gegenüber einem in Bezug auf die Drehrichtung (D) hinteren Umfangsabschnitt (4) vorsteht, um dadurch beim Verdrehen des Metalldübels (1) in die Drehrichtung (D) Substratmaterial abzutragen,
• Kraftbeaufschlagen des Metalldübels (1) in Drehrichtung (D) und dabei Abtragen von Substratmaterial mittels des in radialer Richtung gegenüber dem hinteren Endabschnitt vorstehenden vorderen Endabschnitt der mindestens einen Zinne (2).
**dadurch gekennzeichnet,**
**dass** der Metalldübel ein Innengewinde (7) zum Festlegen eines Außengewindeelementes umfasst, und
**dass** das Kraftbeaufschlagen des Metalldübels (1) in axialer Richtung pulsierend erfolgt.

2. Verfahren nach Anspruch 1,
**dadurch gekennzeichnet,**
**dass** der Metalldübel (1) gleichzeitig oder nacheinander in axialer Richtung und in Drehrichtung (D) kraftbeaufschlagt wird.

3. Verfahren nach einem der vorhergehende Ansprüche,
**dadurch gekennzeichnet,**
**dass** der Metalldübel (1) nach dem Abtragen von Substratmaterial in Einsetzrichtung (E) kraftbeaufschlagt wird, dass eine Radialkraftkomponente resultiert, die den hinteren Umfangsabschnitt (4), zumindest näherungsweise, in radialer Richtung gleich weit nach außen verstellt wie den vorderen Umfangsabschnitt (3) der Zinne (2), so dass vorderer und hinterer Umfangsabschnitt (3, 4) der Zinne (2), zumindest näherungsweise, auf demselben Radius zum liegen kommen.

4. Verfahren nach einem der vorhergehenden Ansprüche,
**dadurch gekennzeichnet,**
**dass** der bereitzustellende Dübel (1) vor dem Einbringen in die Bohrung (17), zumindest im Bereich der Zinnen (2) und/oder einem axial daran anschließenden, insbesondere umfangsgeschlossenen Axialabschnitt (5), eine Zylindermantelhüllkontur aufweist.

5. Verfahren nach einem der vorhergehenden Ansprüche,
**dadurch gekennzeichnet,**
**dass** der bereitzustellende Dübel (1) eine in Einsetzrichtung (E) weisende, geschlossene Stirnseite aufweist.

6. Verfahren nach einem der vorhergehenden Ansprüche,
**dadurch gekennzeichnet,**
**dass** die Kraftbeaufschlagung in die Drehrichtung (D) mittels mindestens eines Radialfortsatzes eines Werkzeuges (11) erfolgt, der entweder im Falle des Vorsehens einer einzigen Zinne (2) in radialer Richtung in den
Abstand zwischen dem hinteren und dem vorderen Umfangsabschnitt (3, 4) der einen Zinne (2) ragt und den hinteren Umfangsabschnitt (4) der Zinne (2) in die Drehrichtung (D) kraftbeaufschlagt oder der im Falle des Vorsehen einer ersten und mindestens einer zweiten in Drehrichtung (D) von der ersten Zinne (2) beabstandeten Zinne (2) in radialer Richtung in den Abstand zwischen der ersten und der zweiten Zinne (2) ragt und den hinteren Umfangsabschnitt (4) der ersten Zinne (2) in die Drehrichtung (D) kraftbeaufschlagt, oder der einen nicht in radialer Richtung verformten Axialfortsatz in die Drehrichtung (D) kraftbeaufschlagt.

7. Verfahren nach einem der vorhergehenden Ansprüche,
**dadurch gekennzeichnet,**
**dass** die Bohrung (17) als Stufenbohrung hergestellt wird.

8. Werkzeug, insbesondere zum Aufsetzen auf einen Schlagbohrer oder auf einen Schlagschrauber oder aufgesetzt auf einen Schlagbohrer oder Schlagschrauber, zu Durchführung eines Verfahrens nach einem der vorhergehenden Ansprüche mit einer Kraftbeaufschlagungsfläche zum Erzeugen einer auf die Zinne (2) des Metalldübels (1) wirkenden Radialkraftkomponente bei Axialkraftbeaufschlagung, wobei die Kraftbeaufschlagungsfläche derart ausgeformt ist, dass diese den in die Drehrichtung (D) weisenden vorderen Umfangsabschnitt (3) der Zinne (2) weiter in radialer Richtung nach außen verstellt als den entgegen der Drehrichtung (D) weisenden hinteren Endabschnitt.

9. Verbindung zwischen einem Metalldübel (1) und einem, vorzugsweise als Vollmaterialsubstrat ausgebildeten, Substrat (16), hergestellt nach einem der Verfahren mit den Merkmalen mindestens eines der Ansprüche 1 bis 7 und/oder hergestellt mit einem Werkzeug (11) nach Anspruch 8.

10. Verbindung nach Anspruch 9,
**dadurch gekennzeichnet,**
**dass** der vordere Umfangsabschnitt (3) der mindestens einen Zinne (2) in radialer Richtung weiter vorsteht, vorzugsweise mindestens 0,2mm, bevorzugt mindestens 0,5mm, besonders bevorzugt mindestens 1,0mm, weiter bevorzugt mindestens 1,5mm, noch weiter bevorzugt mindestens 2,0mm weiter vorsteht, als der hintere Umfangsabschnitt (4) der Zinne.

11. Verbindung nach einem der Ansprüche 9 oder 10,
**dadurch gekennzeichnet,**
**dass** in einem Bereich radial zwischen einer Umfangskontur der Bohrung (17) und dem axial hinteren Ende der mindestens einen Zinne (2) kein Substratmaterial mehr vorhanden ist.

12. Verwendung eines Metalldübels (1) mit mindestens einer sich entgegen einer Einsetzrichtung (E) erstreckenden endseitige, sich in eine in Umfangsrichtung orientierte Drehrichtung (D) erstreckenden Zinne (2) sowie mit einem Innengewinde (7) zum Festlegen eines Außengewindeelementes zur Durchführung des Verfahren nach einem der Ansprüche 1 bis 7 und/oder zum Herstellen einer Verbindung (15) nach einem der Ansprüche 8 bis 11.

13. Verwendung nach Anspruch 12,
**dadurch gekennzeichnet,**
**dass** der verwendete Metalldübel (1) eine geschlossene in Einsetzrichtung (E) weisende Stirnseite aufweist.

14. System, umfassend einen Metalldübel (1) mit mindestens einer sich entgegen einer Einsetzrichtung (E) erstreckenden endseitige, sich in eine in Umfangsrichtung orientierte Drehrichtung (D) erstreckenden Zinne (2) sowie mit einem Innengewinde (7) zum Festlegen eines Außengewindeelementes und ein Werkzeug gemäß Anspruch 8.

## Claims

1. A method for producing a fixed connection (15) between a metal anchor (1) and a substrate (16), preferably a solid material substrate, with the steps of:
• providing a metal anchor (1) that features on its end at least one crenellation (2) extending opposite to an inserting direction (E) and in a rotating direction (D) that is oriented in the circumferential direction,
• producing a bore (17) in the substrate (16),
• inserting the metal anchor (1) into the bore (17) in the inserting direction (E),
• exerting a force upon the metal anchor (1) in the inserting direction (E) and thereby generating a radial force component such that a front circumferential section (3) pointing in the rotating direction (D) is adjusted radially outward in such a way that the front circumferential section (3) radially protrudes over a rear circumferential section (4) referred to the rotating direction (D) in order to thereby remove substrate material during the rotation of the metal anchor (1) in the rotating direction (D), and
• exerting a force upon the metal anchor (1) in the rotating direction (D) and thereby removing substrate material by means of the front end section of the at least one crenellation (2) that radially protrudes over the rear end section,
**characterized in**
**that** the metal anchor features an internal thread (7) for locating an externally threaded element, and in
**that** the force is exerted upon the metal anchor (1) in the axial direction in a pulsating fashion.

2. The method according to claim 1, **characterized in that** a force is simultaneously or successively exerted upon the metal anchor (1) in the axial direction and in the rotating direction (D).

3. The method according to one of the preceding claims, **characterized in that** a force is exerted upon the metal anchor (1) in the inserting direction (E) after the removal of substrate material, and **in that** a resulting radial force component adjusts the rear circumferential section (4) radially outward at least approximately as far as the front circumferential section (3) of the crenellation (2) such that the front and the rear circumferential sections (3, 4) of the crenellation (2) are at least approximately positioned on the same radius.

4. The method according to one of the preceding claims, **characterized in that** the anchor (1) to be provided has prior to the insertion into the bore (17) an enveloping contour of a cylinder jacket at least in the region of the crenellations (2) and/or an axial section (5) that is located axially adjacent thereto and, in particular, circumferentially closed.

5. The method according to one of the preceding claims, **characterized in that** the end face of the anchor (1) to be provided, which points in the inserting direction (E), is closed.

6. The method according to one of the preceding claims, **characterized in that** the force is exerted in the rotating direction (D) by means of at least one radial projection of a tool (11) which, in the case of a single crenellation (2), radially protrudes into the clearance between the rear and the front circumferential sections (3, 4) of the one crenellation (2) and exerts a force in the circumferential direction (D) upon the rear circumferential section (4) of the crenellation (2) or, in the case of a first crenellation and at least one second crenellation (2) that is spaced apart from the first crenellation (2) in the rotating direction (D), radially protrudes into the clearance between the first and the second crenellation (2) and exerts a force in the rotating direction (D) upon the rear circumferential section (4) of the first crenellation (2) or exerts a force in the rotating direction (D) upon an axial projection that is not radially deformed.

7. The method according to one of the preceding claims, **characterized in that** the bore (17) is produced in the form of a stepped bore.

8. A tool, particularly for being attached to a percussion drill or an impact driver or being attached to a percussion drill or an impact driver, in order to carry out a method according to one of the preceding claims, featuring a force application surface for generating a radial force component acting upon the crenellation (2) of the metal anchor (1) when an axial force is exerted, wherein the force application surface is shaped in such a way that it adjusts the front circumferential section (3) of the crenellation (2) pointing in the rotating direction (D) farther radially outward than the rear end section pointing opposite to the rotating direction (D).

9. A connection between a metal anchor (1) and a substrate (16), preferably a solid material substrate, which is produced in accordance with one of the methods with the characteristics of at least one of claims 1-7 and/or produced with a tool (11) according to claim 8.

10. The connection according to claim 9, **characterized in that** the front circumferential section (3) of the at least one crenellation (2) radially protrudes farther than the rear circumferential section (4) of the crenellation, preferably by at least 0.2 mm, preferentially by at least 0.5 mm, especially by at least 1.0 mm, particularly by at least 1.5 mm, primarily by at least 2.0 mm.

11. The connection according to one of claims 9 or 10, **characterized in that** no substrate material is any longer present in a region located radially between a circumferential contour of the bore (17) and the axial rear end of the at least one crenellation (2).

12. A utilization of a metal anchor (1) that features on its end at least one crenellation (2) extending opposite to an inserting direction (E) and in a rotating direction (D) that is oriented in the circumferential direction, as well as an internal thread (7) for locating an externally threaded element, in order to carry out the method according to one of claims 1-7 and/or to produce a connection (15) according to one of claims 8-11.

13. The utilization according to claim 12, **characterized in that** the end face of the anchor (1) used, which points in the inserting direction (E), is closed.

14. A system comprising a metal anchor (1) that features on its end at least one crenellation (2) extending opposite to an inserting direction (E) and in a rotating direction (D) that is oriented in the circumferential direction, as well as an internal thread (7) for locating an externally threaded element, and a tool according to claim 8.

## Revendications

1. Procédé de production d'une liaison solide (15) entre une cheville métallique (1) et un substrat (16), de préférence un substrat en matériau plein, comprenant les étapes suivantes:
• Fournir une cheville métallique (1), comprenant au moins un créneau terminal (2), s'étendant à l'encontre de la direction d'insertion (E) et s'étendant dans une direction de rotation (D) orientée dans la direction périphérique,
• Pratiquer un perçage (17) dans le substrat (16),
• Insérer la cheville métallique (1) dans le perçage (17) dans la direction d'insertion (E),
• Appliquer une force à la cheville métallique (1) dans la direction d'insertion (E) et produire ainsi une composante de force radiale, de telle manière qu'une partie périphérique avant (3) orientée dans la direction de rotation (D) soit déplacée radialement vers l'extérieur, de telle manière que la partie périphérique avant (3) soit saillante en direction radiale par rapport à une partie périphérique arrière (4) par rapport à la direction de rotation (D), afin d'enlever ainsi du matériau du substrat lors de la rotation de la cheville métallique (1) dans la direction de rotation (D),
• Appliquer une force à la cheville métallique (1) dans la direction de rotation (D) et enlever ainsi du matériau du substrat au moyen de la partie d'extrémité avant dudit au moins un créneau (2) saillante en direction radiale par rapport à la partie d'extrémité arrière,
**caractérisé en ce que** la cheville métallique comporte un filet intérieur (7) pour la fixation d'un élément fileté extérieurement et **en ce que** l'application d'une force à la cheville métallique (1) en direction axiale est effectuée de façon pulsée.

2. Procédé selon la revendication 1, **caractérisé en ce que** l'on applique une force à la cheville métallique (1) simultanément ou successivement en direction axiale et en direction de rotation (D).

3. Procédé selon l'une quelconque des revendications précédentes, **caractérisé en ce que** l'on applique à la cheville métallique (1) une force dans la direction d'insertion (E) après l'enlèvement de matériau du substrat, **en ce qu'**il en résulte une composante de force radiale, qui déplace la partie périphérique arrière (4), au moins approximativement en direction radiale vers l'extérieur dans la même mesure que la partie périphérique avant (3) du créneau (2), de telle manière que les parties périphériques avant et arrière (3, 4) du créneau (2) viennent s'appliquer au moins approximativement sur le même rayon.

4. Procédé selon l'une quelconque des revendications précédentes, **caractérisé en ce que** la cheville à fournir (1) présente, avant l'insertion dans le perçage (17), un contour d'enveloppe extérieure cylindrique, au moins dans la région des créneaux (2) et/ou dans une partie axiale (5), en particulier fermée en périphérie, se raccordant axialement à celle-ci.

5. Procédé selon l'une quelconque des revendications précédentes, **caractérisé en ce que** la cheville à fournir (1) présente une face frontale fermée, orientée dans la direction d'insertion (E).

6. Procédé selon l'une quelconque des revendications précédentes, **caractérisé en ce que** l'application d'une force dans la direction de rotation (D) est effectuée au moyen d'au moins un prolongement radial d'un outil (11) qui, soit dans le cas de la présence d'un seul créneau (2), s'engage en direction radiale dans l'espace entre la partie périphérique arrière (4) et la partie périphérique avant (3) dudit créneau (2) et exerce une force sur la partie périphérique arrière (4) du créneau (2) dans la direction de rotation (D), soit dans le cas de la présence d'un premier et au moins d'un deuxième créneau (2) distant du premier créneau (2) dans la direction de rotation (D) s'engage dans l'espace entre le premier et le deuxième créneaux (2) et applique une force sur la partie périphérique arrière (4) du premier créneau (2) dans la direction de rotation (D), soit qui applique une force dans la direction de rotation (D) au prolongement axial non déformé en direction radiale.

7. Procédé selon l'une quelconque des revendications précédentes, **caractérisé en ce que** l'on réalise le perçage (17) sous forme de perçage étagé.

8. Outil, en particulier à monter sur une perceuse à percussion ou sur une visseuse à percussion ou monté sur une perceuse à percussion ou sur une visseuse à percussion, pour la mise en oeuvre d'un procédé selon l'une quelconque des revendications précédentes avec une face d'application de force pour la production d'une composante de force radiale agissant sur le créneau (2) de la cheville métallique (1) lors de l'application d'une force axiale, dans lequel la face d'application de force est déformée de telle manière qu'elle déplace en direction radiale vers l'extérieur la partie périphérique avant (3) du créneau (2) orientée dans la direction de rotation (D) plus loin que la partie d'extrémité arrière orientée à l'encontre de la direction de rotation (D).

9. Liaison entre une cheville métallique (1) et un substrat (16), de préférence un substrat en matériau plein, réalisée selon un des procédés présentant les caractéristiques d'au moins une des revendications 1 à 7 et/ou réalisée avec un outil (11) selon la revendication 8.

10. Liaison selon la revendication 9, **caractérisée en ce que** la partie périphérique avant (3) dudit au moins un créneau (2) est plus saillante en direction radiale, de préférence d'au moins 0,2 mm, de préférence encore d'au moins 0,5 mm, de préférence encore d'au moins 1,0 mm, de préférence particulière d'au moins 1,5 mm, et de préférence particulière encore d'au moins 2,0 mm, que la partie périphérique arrière (4) du créneau.

11. Liaison selon l'une des revendications 9 ou 10, **caractérisée en ce qu'**il n'y a plus de matériau du substrat dans une région située radialement entre un contour périphérique du perçage (17) et l'extrémité axialement arrière dudit au moins un créneau (2).

12. Utilisation d'une cheville métallique (1) avec au moins un créneau terminal (2) s'étendant à l'encontre d'une direction d'insertion (E) et s'étendant dans une direction de rotation (D) orientée en direction périphérique ainsi qu'avec un filet intérieur (7) pour la fixation d'un élément fileté extérieurement pour la mise en oeuvre du procédé selon l'une quelconque des revendications 1 à 7 et/ou pour la réalisation d'une liaison (15) selon l'une quelconque des revendications 8 à 11.

13. Utilisation selon la revendication 12, **caractérisée en ce que** la cheville métallique utilisée (1) présente une face frontale fermée orientée dans la direction d'insertion (E).

14. Système, comprenant une cheville métallique (1) avec au moins un créneau terminal (2) s'étendant à l'encontre d'une direction d'insertion (E) et s'étendant dans une direction de rotation (D) orientée dans la direction périphérique, ainsi qu'avec un filet intérieur (7) pour la fixation d'un élément fileté extérieurement et un outil selon la revendication 8.
